# EUROPEAN PATENT SPECIFICATION

(11) **EP 2 169 816 B1**
(45) Date of publication and mention of the grant of the patent: **20.06.2012**
(21) Application number: 09168772.3
(22) Date of filing: 27.08.2009
(51) Int. Cl.: H02M 1/36, H02M 1/42

(54) **Startup circuit for power factor correction controller IC**
Anlaufschaltung für eine integrierte Leistungsfaktorkorrektursteuerschaltung
Circuit de démarrage pour un circuit intégré d'un contrôleur de correction du facteur de puissance

(30) Priority: 27.09.2008 CN 200810161481
(43) Date of publication of application: 31.03.2010
(73) Proprietor: OSRAM AG, 81543 München (DE)
(72) Inventor: Li, Shangbin, 51140 Guangzhou City Guangdong (CN); MA, Changsong, 511400 Guangzhou City Guangdong (CN)

(56) References cited:
- EP-A- 0 525 898
- EP-A- 0 651 310
- US-A- 4 866 590
- US-A- 5 880 942
- US-B1- 6 246 596
- "LOW LOSS-TYPE STARTER CIRCUIT FOR SWITCHING MODE POWER SUPPLY" IBM TECHNICAL DISCLOSURE BULLETIN, IBM CORP. NEW YORK, US, vol. 31, no. 5, 1 October 1988 (1988-10-01), page 424/425, XP000023170 ISSN: 0018-8689

## Description

### Field of the Invention

The present invention relates to a startup circuit, and in particular, to a startup circuit for a power factor correction (PFC) controller integrated circuit (IC).

### Background of the Invention

For a PFC controller IC, the power supply current is generally obtained from a charge pump circuit connected with an auxiliary winding of a boost choke. However, before the IC is powered, there is no high frequency current flowing through the boost choke. To initiate the IC, a common solution is to connect a startup resistor between a direct current (DC) rail and a supply voltage pin of the IC. Because most blocks in the IC do not function at startup stage, usually less than one milliampere is needed to enable the IC. The startup resistor is around several hundred kilohms depending on the rectified DC rail voltage.

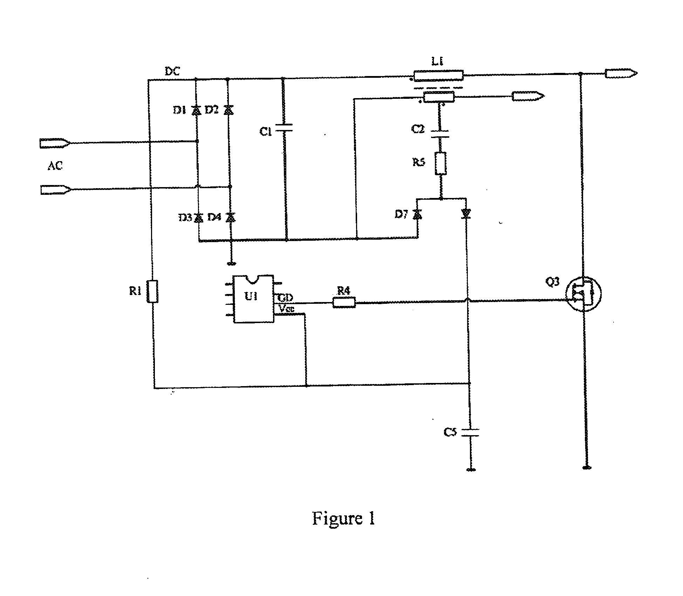

Figure 1 shows a startup circuit in the prior art. The startup circuit includes a rectification circuit including diodes D1, D2, D3 and D4 as well as a charge pump circuit including capacitor C2, resistor R5 and diodes D7. U1 is a PFC controller IC, and the Vcc pin is the supply voltage pin of the IC. A capacitor C5 is connected between the Vcc pin and the ground potential. The GD pin is the gate drive pin of the IC. U1 controls the MOSFET Q3 to turn on or off via a resistor R4 through the GD pin, so that the average input current waveform is proportional to the mains voltage waveform (a sinewave). The charge pump circuit constituted by the capacitor C2 connected with the auxiliary winding of the PFC boost choke, the resistor R5 and the diode D7 is a main power supply of U1. R1 is the startup resistor, one end of which is connected to the output of the rectification circuit, and the other end is connected to the Vcc pin of the IC. When power is on, a current flows through the startup resistor R1 and charges the capacitor C5 to a rated turn-on threshold of U1, U1 controls the MOSFET Q3 to turn on through the GD pin. After that, the main PFC circuit kicks in, and the charge pump circuit provides the IC with a normal running power.

The drawback of the above circuit is the noticeable power loss consumed by the startup resistor R1 after the charge pump circuit gets started. Although the resistor value can be increased to reduce the power loss, the current flowing through the startup resistor during startup stage is reduced at the same time due to the increased resistor, thus the system startup time is sacrificed.
The patent application US 5,880,942 shows a power supply device capable of decreasing the amount of power used by a controller IC by utilizing a control transistor which is set into a switching operation responsive to a pulse control signal. Particularly, the power supply device includes a switch circuit which is connected in series to a starting resistor for supplying the output voltage rectified from the AC power source when starting up to the power supply control circuit. The power supply device includes a switch-control circuit which turns off the switch circuit when the output voltage of an auxiliary power supply circuit reaches a voltage high enough for stable operation of the power supply control circuit. The circuit further comprises a separation device, coupled to the starting terminal of the power supply control circuit and the power source, to ensure that there is no need for an extremely high voltage to drive the switch-control circuit. As a result, the power loss at the starting resistor is eliminated after startup such that the power consumption of the power saving operation is also eliminated.

### Summary of the Invention

The object of the present invention is to provide a cost-effective circuit, with which the startup current may be increased, so that a relatively large startup current is available when the power supply is on, and a relatively short startup time may be achieved. With the circuit according to the present invention, after the PFC boost choke starts to supply power to the PFC controller IC, the current flowing through the startup resistor may be reduced greatly, so that a low power consumption may be achieved.

According to the present invention, it is provided a startup circuit for a PFC controller chip, which includes a first current path and a second current path, wherein the input of the first current path is connected with a startup resistor, and the output thereof is connected with a supply voltage pin of the chip. The input of the second current path is connected with the startup resistor, and the output thereof is connected with the ground potential. Wherein, the first current path is ON in response to the situation that the PFC controller chip does not work, and OFF in response to the situation that the PFC controller chip works normally. Whereas the second current path is OFF in response to the situation that the PFC controller chip does not work, and ON in response to the situation that the PFC controller chip works normally.

With the circuit according to the present invention, the startup resistor may be selected to be relatively small, and the startup time of U1 may be greatly reduced. On the other hand, a better system efficiency may be achieved during the normal operation, because the power consumption on the startup resistor is eliminated through the above additional circuit.

### Brief Description of the Drawings

The present invention may be better understood by referring to the description hereinafter in combination with the drawings, wherein in the drawings, the same or similar reference signs are used to indicate the same or similar components. All the drawings and the detailed description are included in the specification and constitute a part of the specification, and are used to further present examples to illustrate the preferred embodiments of the invention and explain the principles and advantages of the invention. Wherein:

Figure 1 shows a startup circuit for the PFC controller chip in the prior art;

Figure 2 shows a startup circuit for the PFC controller chip according to a first embodiment of the invention;

Figure 3 shows a startup circuit for the PFC controller chip according to a second embodiment of the invention; and

Figure 4 shows a startup circuit for the PFC controller chip according to a third embodiment of the invention.

### Detailed Description of the Embodiments

Hereinafter, the embodiments of the present invention will be described in combination with the drawings.

It should be further pointed out here that in the drawings, only the device structure closely related to the solution of the present invention is illustrated in the drawings, and other details having little relation with the present invention is omitted, so as to avoid making the present invention unclear due to unnecessary details.

The embodiments of the present invention provide a startup circuit, and in particular, a startup circuit for a PFC controller IC. Specifically, the circuit provided by the embodiments of the invention is intended to be employed in an instant start and program start electronic ballast.

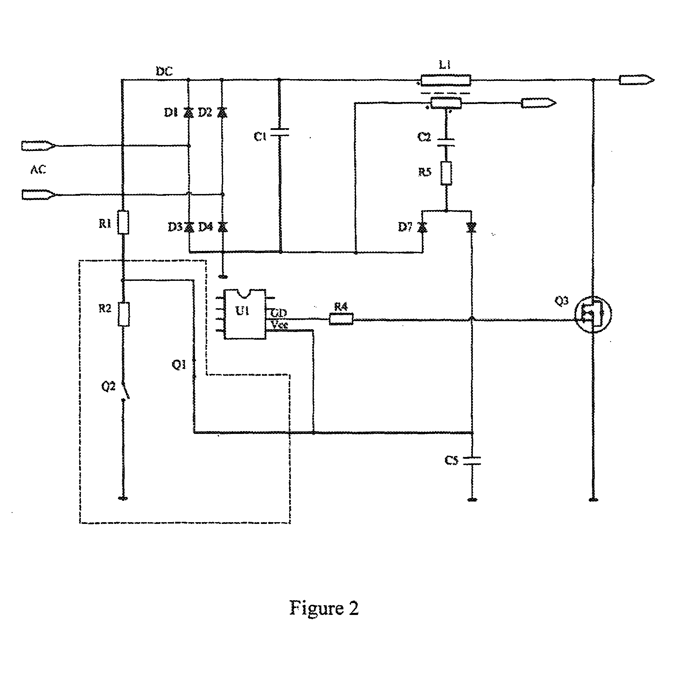

Figure 2 shows a principle circuit according to the first embodiment of the invention. In comparison with the circuit in the prior art, an additional circuit in the dashed block is added. The additional circuit includes two current paths, i.e., a first current path and a second current path, where the first current path includes a first switch Q1, and the second current path includes a second resistor R2 and a second switch Q2 which are connected in series. The input of the first current path is connected with a startup resistor R1, and the output thereof is connected with a supply voltage pin Vcc of the chip U1. The input of the second current path is connected with the startup resistor R1, and the output thereof is connected with the ground potential. The values of the startup resistor R1 and the second resistor R2 may be selected so that the value of the second resistor R2 is greatly larger than that of the startup resistor R1. Preferably, the value of R2 is 10 to 20 times larger than that of R1. For example, when the value of R2 is selected to be 1MΩ, the value of the startup resistor R1 may be selected to be smaller accordingly, such as 82KΩ. When the system is startup, the first switch Q1 is turned on and the second switch Q2 is turned off, so that the startup current charges a capacitor C5 via Q1. Because the value of the startup resistor R1 may be selected to be relatively small in comparison with the prior art, the capacitor C5 can be charged up faster to reach the rated turn-on threshold of U1. When U1 is turned on, it controls the MOSFET Q3 to turn on through the GD pin. After that, the main PFC circuit kicks in, and the charge pump circuit provides the IC with a normal running power. At this time, the first switch Q1 is turned off and the second switch Q2 is turned on with the output signal of the chip. Because the value of the second resistor R2 is relatively large, the startup current may be reduced as much as possible. The specific circuit for employing the output signal of the chip to control the first switch and the second switch will be further illustrated in detail hereinafter.

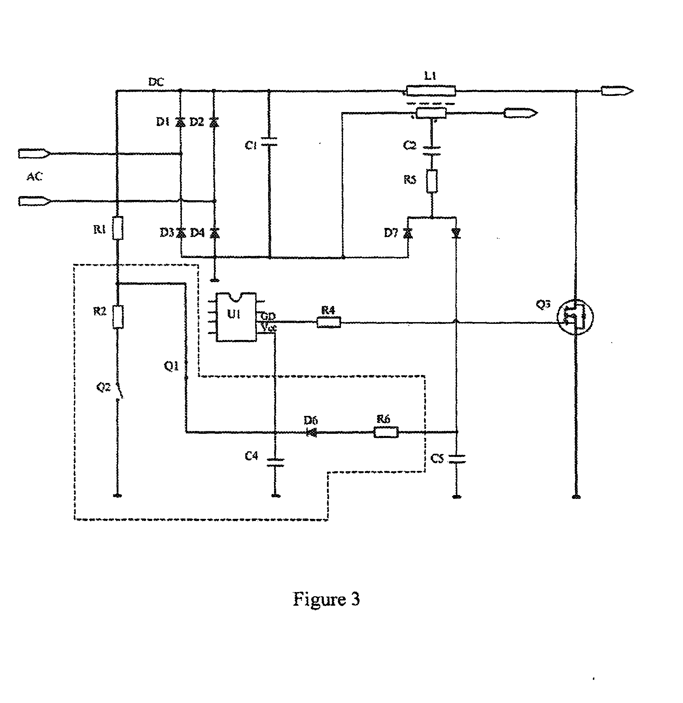

Figure 3 shows a principle circuit according to the second embodiment of the invention. This circuit is further improved based on the circuit shown in Figure 2. A first capacitor C4 is connected between the output of the first current path and the ground potential, and the output of the first current path is connected to the output of the charge pump circuit through a reversedly connected second diode D6 and a third resistor R6. The value of the first capacitor C4 is selected to be much smaller than that of the capacitor C5. Preferably, the value of the capacitor C5 is 200 to 300 times larger than that of the capacitor C4. For example, C5 is selected to be 22µF, and C4 is selected to be 100nF. Because the diode D6 is included in this additional circuit, the startup current is prevented from flowing into the capacitor C5 through the resistor R6. Because the value of the capacitor C4 is much smaller than that of the usually used capacitor C5, a shorter startup time can be achieved.

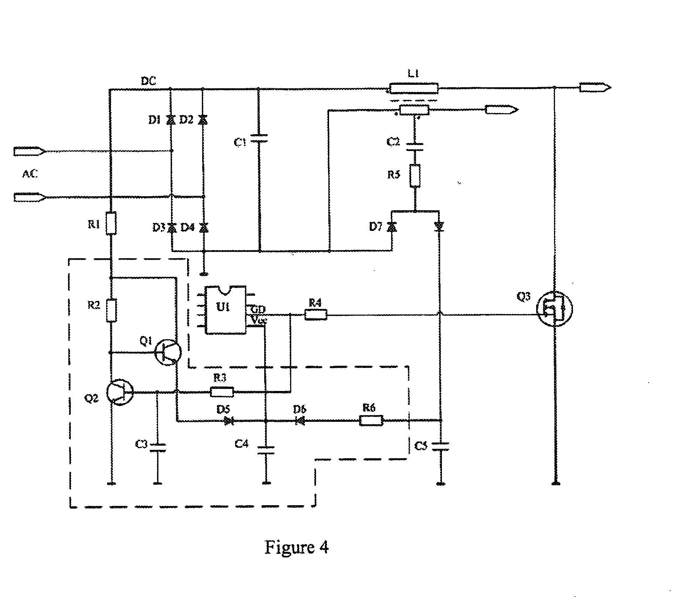

Figure 4 shows a specific circuit according to the third embodiment of the invention. In the additional circuit, a high voltage transistor Q1 is included. The high voltage transistor Q1 can withstand the DC rail voltage during the OFF state. R3 and C3 basically form a low pass filter. The input of the low pass filter is a drive signal of the MOSFET Q3, and the output of the low pass filter is connected to the base of a transistor Q2. A diode D5 is used for preventing the Q1 base-emitter PN junction breakdown when Q1 is OFF and Q2 is ON. This additional circuit also further includes a diode D6, which is used to prevent the startup current from flowing into the capacitor C5 through the resistor R6, so that a shorter startup time can be achieved. The resistor R2 functions as a pull up resistor, and the value of the resistor R2 is much higher than that of R1.

When the system is first turned on, the original state of the transistor Q2 is OFF since the capacitor C3 is not charged up. The transistor Q1 is turned on due to the pull up resistor R2. Thus, the startup current flows through the resistor R1, transistor Q1 and diode D5 to charge up the capacitor C4. Once the capacitor voltage reaches the IC enabling threshold, the IC starts to output gating signal to the MOSFET Q3. Now the PFC boost converter starts to work and IC draws power from the diode D6 and resistor R6 linked to the charge pump circuit. A positive DC bias signal is accumulated on the capacitor C3 due to the filtered MOSFET gating signal. Finally, the transistor Q2 is turned on, and Q1 is turned off since its base voltage is pulled down via the transistor Q2. By this way, the startup current can be reduced mostly due to the high resistance of the resistor R2 in the circuit.

It should be noted that it is designed in the embodiment shown in Figure 4 to use the signal of the GD pin of the IC to control the second current path, on which the transistor Q2 is located, to turn on, so as to cause the first current path, on which the transistor Q1 is located, to turn off. However, based on the solution provided by the present invention, it would readily occur to those skilled in the art that the signal of the IC may also be used to control the first current path to turn off, so as to cause the second current path to turn on.

In most applications, the startup time is fairly important. For the application in program start ballast, the filament is always heated before ignition. To maximize the lamp life, certain amount of energy has to be delivered to each filament before ignition. If the allowed preheat time is longer, to deliver the same amount of energy, the preheat power can be lower. On the other hand, normally, during the steady state after lamp ignition, there is always certain amount of filament losses in a program start ballast caused by the filament preheat circuitry. Although it is very desirable to preheat the filament sufficiently in the preheat stage and reduce the filament losses in the steady state, the filament losses can hardly be completely eliminated.

For most filament preheat circuitry, there are some losses in the steady state on the filament. Generally, the more power is generated by the filament preheat circuitry to heat the filament during the preheat stage, the more losses are generated on the filaments during the steady state.

However, if more time is available for heating the lamp filament, less power is required to meet the same energy requirement, and there are fewer losses on the filaments during the steady state. The preheat time cannot be infinitely long, because it is required that a program start ballast needs to ignite the lamps within 1 to 1.5 seconds from the instant when the AC power is turned on. With a normal startup circuit as shown in Figure 1, the PFC chip takes around 0.5 seconds to start and stabilize the DC rail , and the preheat circuit can only effectively operate after that.

In a program start ballast, for example, a lamp is expected to ignite within 1 to 1.5 seconds from the instant the AC power is turned on, which limits the time that is available for preheating the filaments. If the PFC chip needs additional 0.5 seconds to start to function, the preheat time is further limited. On the other hand, if the PFC chip can start in less than 100ms, the filament preheat can have more time to use, and the limit of igniting the lamp within 1.5 seconds can still be met.

With the circuit according to the present invention, a relatively small startup resistor may be selected, and the startup time of U1 may be greatly reduced. Meanwhile, a better system efficiency may be achieved during the normal operation, because the power loss on the startup resistor is eliminated through the additional circuit. In particular, with the circuit according to the present invention shown in Figure 2, the PFC chip can be started within 80 ms, so that the preheat circuitry can have extra 0.4 seconds to preheat the filament. As a result, the preheat power can be reduced, and the filament losses in the steady state can be reduced.

Finally, it should be noted that the term "include", "comprise" or any other variations means a non-exclusive inclusion, so that the process, method, article or device that includes a series of elements includes not only these elements but also other elements that are not explicitly listed, or further includes inherent elements of the process, method, article or device. Moreover, when there is no further limitation, the element defined by the wording "include(s) a ..." does not exclude the case that in the process, method, article or device that includes the element there are other same elements.

The embodiments of the invention are described in detail in combination with drawings. However, it should be understood that the embodiments described above are only used for illustrating the invention, and do not constitute a limitation of the invention. Various modifications and variations may be made to the above embodiments by those skilled in the art, without departing from the scope of the present invention, as defined by the appended claims.

## Claims

1. A startup circuit for a (PFC) controller chip, comprising: a first current path and a second current path, wherein
an input of the first current path is connectable with a startup resistor (R1), and an output of the first current path is connectable with a supply voltage pin (Vcc) of the chip;
an input of the second current path is connectable with the startup resistor (R1), and an output of the second current path is connected with a ground potential;
wherein,
the first current path is ON in response to a situation that the PFC controller chip does not work, and OFF in response to a situation that the PFC controller chip works normally; and
the second current path is OFF in response to the situation that the PFC controller chip does not work, and ON in response to the situation that the PFC controller chip works normally,
the startup circuit being **characterized in, that**:
the first current path comprises a first transistor (Q1), and the second current path comprises a second resistor (R2) and a second Transistor (Q2) that are connected in turn in series;
a collector of the first transistor (Q1) is connectable to the startup resistor (R1), a base of the first transistor (Q1) is connected with a first node between the second resistor (R2) and a collector of the second transistor (Q2), an emitter of the first transistor (Q1) is connectable with the supply voltage pin (Vcc) of the chip;
the collector of the second transistor (Q2) is connected to the second resistor (R2), a base of the second transistor (Q2) is connectable to a gate drive (GD) pin of the chip through a third resistor (R3), an emitter of the second transistor (Q2) is connected to the ground potential, and a third capacitor (C3) is connected between the ground potential and a second node, wherein the second node is between the third resistor (R3) and the base of the second transistor (Q2).

2. The startup circuit according to claim 1, further comprising
a first capacitor (C4) connected between the output of the first current path and the ground potential, and a series connection of a second diode (D6) and a third resistor (R6), wherein the output of the first current path is connectable to an output of a charge pump circuit through the reversedly connected second diode (D6) and the third resistor (R6), wherein the output of the charge pump circuit is connected to the ground potential through a second capacitor (C5).

3. The startup circuit according to claim 1, further comprising
a first diode (D5) connected between the emitter of the first transistor (Q1) and the supply voltage pin (Vcc) of the chip, so that a current only flows from the first transistor (Q1) to the supply voltage pin (Vcc).

4. The startup circuit according to claim 1, wherein:
the value of the second capacitor (C5) is 200 to 300 times larger than that of the first capacitor (C4).

5. The startup circuit according to claim 1, wherein:
the value of the second resistor (R2) is 10 to 20 times larger than that of the startup resistor (R1).

## Patentansprüche

1. Herauffahrschaltung für einen PFC-Steuerungschip, umfassend: einen ersten Strompfad und einen zweiten Strompfad, wobei
ein Eingang des ersten Strompfads mit einem Herauffahrwiderstand (R1) verbindbar ist und ein Ausgang des ersten Strompfads mit einem Versorgungsspannungsanschluss (Vcc) des Chips verbindbar ist;
ein Eingang des zweiten Strompfads mit dem Herauffahrwiderstand (R1) verbindbar ist und ein Ausgang des zweiten Strompfads mit einem Massepotential verbunden ist;
wobei
der erste Strompfad als Reaktion auf eine Situation, dass der PFC-Steuerungschip nicht arbeitet, ON ist und als Reaktion auf eine Situation, dass der PFC-Steuerungschip normal arbeitet, OFF ist; und
der zweite Strompfad als Reaktion auf die Situation, dass der PFC-Steuerungschip nicht arbeitet, OFF ist und als Reaktion auf die Situation, dass der PFC-Steuerungschip normal arbeitet, ON ist, wobei die Herauffahrschaltung **dadurch gekennzeichnet ist, dass**
der erste Strompfad einen ersten Transistor (Q1) umfasst und der zweite Strompfad einen zweiten Widerstand (R2) und einen zweiten Transistor (Q2) umfasst, die jeweils in Reihe geschaltet sind;
ein Kollektor des ersten Transistors (Q1) mit dem Herauffahrwiderstand (R1) verbindbar ist, eine Basis des ersten Transistors (Q1) mit einem ersten Knoten zwischen dem zweiten Widerstand (R2) und einem Kollektor des zweiten Transistors (Q2) verbunden und ein Emitter des ersten Transistors (Q1) mit dem Versorgungsspannungsanschluss (Vcc) des Chips verbindbar ist;
der Kollektor des zweiten Transistors (Q2) mit dem zweiten Widerstand (R2) verbunden ist, eine Basis des zweiten Transistors (Q2) durch einen dritten Widerstand (R3) mit einem Anschluss zur Gateansteuerung (GD) des Chips verbindbar ist, ein Emitter des zweiten Transistors (Q2) mit dem Massepotential verbunden ist und ein dritter Kondensator (C3) zwischen das Massepotential und einen zweiten Knoten geschaltet ist, wobei sich der zweite Knoten zwischen dem dritten Widerstand (R3) und der Basis des zweiten Transistors (Q2) befindet.

2. Herauffahrschaltung nach Anspruch 1, ferner umfassend:
einen ersten Kondensator (C4), der zwischen den Ausgang des ersten Strompfads und das Massepotential geschaltet ist, und eine Reihenschaltung einer zweiten Diode (D6) und eines dritten Widerstands (R6), wobei der Ausgang des ersten Strompfads durch die rückwärts geschaltete zweite Diode (D6) und den dritten Widerstand (R6) mit einem Ausgang einer Ladungspumpenschaltung verbindbar ist, wobei der Ausgang der Ladungspumpenschaltung durch einen zweiten Kondensator (C5) mit dem Massepotential verbunden ist.

3. Herauffahrschaltung nach Anspruch 1, ferner umfassend:
eine erste Diode (D5), die zwischen den Emitter des ersten Transistors (Q1) und den Versorgungsspannungsanschluss (Vcc) des Chips geschaltet ist, so dass ein Strom nur von dem ersten Transistor (Q1) zu dem Versorgungsspannungsanschluss (Vcc) fließt.

4. Herauffahrschaltung nach Anspruch 1, wobei
der Wert des zweiten Kondensators (C5) 200- bis 300-mal größer als der des ersten Kondensators (C4) ist.

5. Herauffahrschaltung nach Anspruch 1, wobei
der Wert des zweiten Widerstands (R2) 10- bis 20-mal größer als der des Herauffahrwiderstands (R1) ist.

## Revendications

1. Circuit de démarrage pour une puce de contrôleur de CFP, comprenant : un premier chemin de courant et un deuxième chemin de courant, dans lequel
une entrée du premier chemin de courant est connectable avec une résistance de démarrage (R1), et une sortie du premier chemin de courant est connectable avec une broche de tension d'alimentation (Vcc) de la puce ;
une entrée du deuxième chemin de courant est connectable avec la résistance de démarrage (R1), et une sortie du deuxième chemin de courant est connectée avec un potentiel de terre ;
dans lequel
le premier chemin de courant est activé en réponse à une situation dans laquelle la puce de contrôleur de CFP ne fonctionne pas, et désactivé en réponse à une situation dans laquelle la puce de contrôleur de CFP fonctionne normalement ; et
le deuxième chemin de courant est désactivé en réponse à une situation dans laquelle la puce de contrôleur de CFP ne fonctionne pas, et activé en réponse à une situation dans laquelle la puce de contrôleur de CFP fonctionne normalement,
le circuit de démarrage étant **caractérisé en ce que** :
le premier chemin de courant comprend un premier transistor (Q1), et le deuxième chemin de courant comprend une deuxième résistance (R2) et un deuxième transistor (Q2) qui sont connectés tour à tour en série ;
un collecteur du premier transistor (Q1) est connectable avec la résistance de démarrage (R1), une base du premier transistor (Q1) est connectée avec un premier noeud entre la deuxième résistance (R2) et un collecteur du deuxième transistor (Q2), un émetteur du premier transistor (Q1) est connectable avec la broche de tension d'alimentation (Vcc) de la puce ;
le collecteur du deuxième transistor (Q2) est connecté avec la deuxième résistance (R2), une base du deuxième transistor (Q2) est connectable avec une broche de commande de grille (GD) de la puce par l'intermédiaire d'une troisième résistance (R3), un émetteur du deuxième transistor (Q2) est connecté au potentiel de terre, et un troisième condensateur (C3) est connecté entre le potentiel de terre et un deuxième noeud, dans lequel le deuxième noeud est entre la troisième résistance (R3) et la base du deuxième transistor (Q2).

2. Circuit de démarrage selon la revendication 1, comprenant en outre
un premier condensateur (C4) connecté entre la sortie du premier chemin de courant et le potentiel de terre, et une connexion en série d'une deuxième diode (D6) et d'une troisième résistance (R6), dans lequel la sortie du premier chemin de courant est connectable à une sortie d'un circuit de pompe de charge par l'intermédiaire de la deuxième diode (D6) à connexion inverse et de la troisième résistance (R6), dans lequel la sortie du circuit de pompe de charge est connectée au potentiel de terre par l'intermédiaire d'un deuxième condensateur (C5).

3. Circuit de démarrage selon la revendication 1, comprenant en outre
une première diode (D5) connectée entre l'émetteur du premier transistor (Q1) et la broche de tension d'alimentation (Vcc) de la puce, de sorte qu'un courant ne passe que du premier transistor (Q1) vers la broche de tension d'alimentation (Vcc).

4. Circuit de démarrage selon la revendication 1, dans lequel :
la valeur du deuxième condensateur (C5) est 200 à 300 fois plus grande que celle du premier condensateur (C4).

5. Circuit de démarrage selon la revendication 1, dans lequel :
la valeur de la deuxième résistance (R2) est 10 à 20 fois plus grande que celle de la résistance de démarrage (R1).
